# EUROPÄISCHE PATENTSCHRIFT

(11) **EP 3 196 471 B1**
(45) Veröffentlichungstag und Bekanntmachung des Hinweises auf die Patenterteilung: **23.08.2023**
(21) Anmeldenummer: 16151858.4
(22) Anmeldetag: 19.01.2016
(51) Int. Cl.: F04D 19/04, F04D 29/058, F16C 32/04, H01F 7/02

(54) **VAKUUMPUMPE**
VACUUM PUMP
POMPE A VIDE

(43) Veröffentlichungstag der Anmeldung: 26.07.2017
(73) Patentinhaber: PFEIFFER VACUUM GMBH, 35614 Asslar (DE)
(72) Erfinder: Wirth, Adrian, 35582 Wetzlar (DE); Conrad, Armin, 35745 Herborn (DE)
(74) Vertreter: Manitz Finsterwald Patent- und Rechtsanwaltspartnerschaft mbB

(56) Entgegenhaltungen:
- EP-A1- 3 150 872
- EP-A2- 2 881 591
- EP-A2- 2 884 125
- WO-A1-2015/177504
- CN-A- 1 287 230
- US-A1- 2014 322 020
- ZHU Z Q ET AL: "Halbach permanent magnet machines and applications: a review", IEE PROCEEDINGS: ELECTRIC POWER APPLICATIONS, INSTITUTION OF ELECTRICAL ENGINEERS, GB, Bd. 148, Nr. 4, 6. Juli 2001 (2001-07-06), Seiten 299-308, XP006016918, ISSN: 1350-2352, DOI: 10.1049/IP-EPA:20010479

## Beschreibung

Die vorliegende Erfindung betrifft eine Vakuumpumpe, insbesondere Turbomolekularpumpe, mit einem gegenüber einem Stator der Vakuumpumpe um eine Rotationsachse drehbaren Rotor, zu dessen drehbarer Lagerung wenigstens ein Permanentmagnetlager vorgesehen ist.

Eine Vakuumpumpe mit den Merkmalen des Oberbegriffs des Anspruchs 1 ist in der EP 2 881 591 A2 offenbart. Überdies sind Vakuumpumpen beispielsweise in der DE 10 2013 113 400 A1 oder EP 2 884 125 A2 beschrieben. Ferner ist ein Magnetlager aus der CN 1287230 A bekannt. Üblicherweise weist eine Vakuumpumpe einen Rotor mit einer um eine Rotationsachse drehbar gelagerten Rotorwelle auf. Zur drehbaren Lagerung der Rotorwelle sind ein Wälzlager im Bereich des Pumpenauslasses und ein Permanentmagnetlager im Bereich des Pumpeneinlasses vorgesehen. Das Permanentmagnetlager umfasst eine rotorseitige Lagerhälfte und eine statorseitige Lagerhälfte, welche jeweils einen Ringstapel aus mehreren in axialer Richtung aufeinandergestapelten, permanentmagnetischen Magnetringen umfassen, die sich unter Ausbildung eines Lagerspalts gegenüber liegen.

Bei der axialen Aneinanderreihung der statorseitigen und rotorseitigen Magnetringe können geometriebedingte oder montagebedingte Deplatzierungen von Magnetmaterial auftreten, welche zu Lagerfehlern führen können. Ferner können, insbesondere bei Ringstapeln, die von einer verhältnismäßig hohen Anzahl an Ringmagneten gebildet werden, sogenannte Setzungseffekte unter Fliehkraft- und Temperatureinwirkung auftreten.

Der vorliegenden Erfindung liegt die Aufgabe zugrunde, eine Vakuumpumpe mit einem verbesserten Permanentmagnetlager bereitzustellen, durch das insbesondere die genannten Nachteile reduziert oder vermieden werden können.

Die Aufgabe wird durch eine Vakuumpumpe mit den Merkmalen des Anspruchs 1 gelöst. Bevorzugte Ausführungsformen und Weiterbildungen der Erfindung werden in den abhängigen Ansprüchen beschrieben.

Die erfindungsgemäße Vakuumpumpe umfasst ein Permanentmagnetlager, das aus einer Kombination von wenigstens einem monolithischen Permanentmagnet und einem oder mehreren Ringmagneten gebildet ist.

Bei der erfindungsgemäßen Vakuumpumpe weist das Permanentmagnetlager zur drehbaren Lagerung des Rotors einen vorzugsweise hohlzylinderförmigen monolithischen Permanentmagneten auf, der in axialer Richtung auch in mehrere Abschnitte unterteilt sein kann, und bei dem benachbarte Abschnitte eine im Wesentlichen entgegengesetzte Magnetpolorientierung aufweisen. Der monolithische Permanentmagnet kann daher in funktioneller Hinsicht einem Magnetringstapel entsprechen bzw. als Ersatz für diesen in einem Permanentmagnetlager einer Vakuumpumpe eingesetzt werden. Mit dem Begriff "monolithisch" ist dabei insbesondere gemeint, dass der Permanentmagnet aus einem Stück gebildet ist und nicht - wie ein Magnetringstapel - aus mehreren Magnetringen zusammengesetzt ist bzw. aus Magnetringen und Zwischenlagen (dünnen Trennscheiben) gebildet wird. Die einzelnen Abschnitte des monolithischen Permanentmagneten sind mit dem Auge somit nicht als solche zu erkennen, sondern sie unterscheiden sich nur bezüglich der Magnetpolorientierung.

Durch den Einsatz eines monolithischen Permanentmagnets in einer Vakuumpumpe, insbesondere als Ersatz eines Magnetringstapels, können alle Vorteile der Magnetringstapel beibehalten werden. Außerdem bietet der monolithische Permanentmagnet ferner den Vorteil, dass geringere Magnetlagerfehler und eine höhere Langzeitstabilität des Magnetlagergebildes zu erwarten sind, zumal die erwähnten Setzungseffekte unter Fliehkraft- und Temperatureinwirkung vermieden oder zumindest verringert werden können.

Erfindungsgemäß lässt sich der monolithische Permanentmagnet in Ergänzung zu Ringmagneten in einem Permanentmagnetlager einsetzen.

Vorteilhaft an dem monolithischen Permanentmagnet ist, dass dieser, insbesondere durch die entgegengesetzte Polorientierung der benachbarten Abschnitte, zur Erhöhung der Steifigkeit des Permanentmagnetlagers beitragen kann, insbesondere wenn ein jeweiliger monolithischer Permanentmagnet sowohl statorseitig als auch rotorseitig im Permanentmagnetlager eingesetzt wird.

Außerdem ist es möglich, dass bei gleicher axialer Länge mehr Polwechsel bei einem monolithischen Permanentmagnet als bei gestapelten Ringmagneten realisiert werden können. Unter Verwendung wenigstens eines monolithischen Permanentmagnets kann daher ein Permanentmagnetlager hergestellt werden, dass bei gleicher Baulänge eine höhere Lagersteifigkeit aufweist als ein Permanentmagnetlager, das aus gestapelten Ringmagneten hergestellt ist.

Mit dem Begriff "Magnetpolorientierung" wird auf die Orientierung bzw. Lage des magnetischen Nordpols bzw. des magnetischen Südpols in dem jeweiligen Abschnitt des monolithischen Permanentmagnets abgestellt. Die Magnetpolorientierung kann daher als Richtung definiert werden, in der sich ausgehend vom magnetischen Südpol eines Abschnitts eine gerade Linie zum magnetischen Nordpol des Abschnitts erstreckt.

Besonders vorteilhaft ist es, wenn bei benachbarten Abschnitten die Magnetpolorientierung des einen Abschnitts zumindest annähernd in axialer Richtung verläuft und wenn die Magnetpolorientierung des anderen Abschnitts zumindest annähernd entgegengesetzt dazu verläuft. Dadurch wird erreicht, dass an der Grenze von benachbarten Abschnitten entweder die Südpole oder die Nordpole der benachbarten Abschnitte einander gegenüberliegen, wodurch bei Verwendung des monolithischen Permanentmagnets in einem Permanentmagnetlager eine besonders hohe Lagersteifigkeit erreicht werden kann.

Aufgrund von technischen Gegebenheiten wird sich ein solch ideales monolithisches Magnetlager normalerweise nicht völlig ohne Übergangsbereiche zwischen den jeweiligen benachbarten Abschnitten herstellen lassen. In solch einem Fall kann eine Lagerssteifigkeit ähnlicher Größe erreicht werden, wenn in dem monolithischen Magneten mehr Pole als im vergleichbaren Ringstapel gebildet werden.

Nach einer bevorzugten Ausgestaltung der Erfindung umfasst das Permanentmagnetlager auf der Seite des Stators einen monolithischen Permanentmagnet und auf der Seite des Rotors einen weiteren monolithischen Permanentmagnet. Ein jeweiliger monolithischer Permanentmagnet kann somit sowohl in der rotorseitigen Lagerhälfte als auch in der statorseitigen Lagerhälfte zum Einsatz kommen, wodurch ein besonders steifes Permanentmagnetlager mit geringen Magnetlagerfehlern und einer hohen Langzeitstabilität realisiert werden kann.

Der statorseitige monolithische Permanentmagnet kann innerhalb des rotorseitigen monolithischen Permanentmagnets angeordnet sein. Umgekehrt kann auch der rotorseitige monolithische Permanentmagnet innerhalb des statorseitigen monolithischen Permanentmagnets angeordnet sein. Zwischen dem statorseitigen monolithischen Permanentmagnet und dem rotorseitigen monolithischen Permanentmagnet kann dabei ein Lagerspalt ausgebildet sein.

Das Permanentmagnetlager kann ein Paar monolithischer Permanentmagnete aufweisen oder aus einem Paar monolithischer Permanentmagnete bestehen. Das Permanentmagnetlager kann derart ausgestaltet sein, dass wenigstens einer der monolithischen Permanentmagnete mehr Pole aufweist als ein vergleichbarer Ringmagnetstapel, insbesondere mit der gleichen axialen Höhe. Dadurch kann eine Lagersteifigkeit zumindest ähnlicher Größe oder sogar eine höhere Lagersteifigkeit als mit dem Ringmagnetstapel erzeugt werden.

Vorzugsweise ist der monolithische Permanentmagnet als hohlzylinderförmiger Körper ausgestaltet. Dadurch eignet sich der monolithische Permanentmagnet besonders gut für den Einsatz in einem Permanentmagnetlager einer Vakuumpumpe, wie beispielsweise einer Turbomolekularpumpe.

Bei einem Verfahren zur Herstellung eines monolithischen Permanentmagnets kann ein als Hohlzylinder ausgebildeter Körper aus einem magnetischen oder magnetisierbaren Material bereitgestellt werden, und zwei oder mehr sich in axialer Richtung gesehen aneinander anschließende, insbesondere ringförmige, Abschnitte des Körpers können derart magnetisiert werden, dass in axialer Richtung zueinander benachbarte Abschnitte eine zumindest im Wesentlichen entgegengesetzte Magnetpolorientierung aufweisen.

Durch das Verfahren kann auf einfache Weise ein monolithisches Permanentmagnetlager in Hohlzylinderform gebildet werden, das eine mehrpolige, in axialer Richtung alternierende Magnetisierung oder Aufmagnetisierung aufweist und sich besonders vorteilhaft zur Verwendung in einem Permanentmagnetlager einer Vakuumpumpe eignet.

Bevorzugt wird der als Hohlzylinder ausgebildete Körper derart bereitgestellt, dass dieser zumindest im Wesentlichen eine axiale Magnetpartikelausrichtung aufweist. Dies kann mittels eines an sich bekannten Verfahrens, z.B. unter Verwendung von Werkzeugpressen, isostatischem Pressen oder Pressmischverfahren, bewerkstelligt werden.

Vorzugsweise erfolgt nach dem Pressen und Sintern des Magneten eine mechanische Oberflächenbearbeitung des bereitgestellten Körpers auf Fertigmaßqualität. Der finale Magnetisierungsvorgang stellt insbesondere den letzten Arbeitsabschnitt der Herstellung dar.

Nach einer bevorzugten Weiterbildung des Verfahrens erfolgt die Magnetisierung derart, dass bei benachbarten Abschnitten die Magnetpolorientierung des einen Abschnitts zumindest annähernd in axialer Richtung verläuft und dass die Magnetpolorientierung des anderen Abschnitts zumindest annähernd entgegengesetzt dazu verläuft. Dadurch wird erreicht, dass sich an der Grenze benachbarter Abschnitte, idealerweise die Nordpole oder die Südpole der benachbarten Abschnitte einander gegenüberstehen, was sich zum Beispiel vorteilhaft auf die erzielbare Lagersteifigkeit eines Permanentmagnetlagers auswirkt, in welchem der hergestellte monolithische Permanentmagnet zum Einsatz kommt.

Zur Magnetisierung der Abschnitte wird vorzugsweise eine Spulenanordnung mit zumindest einer Spule eingesetzt. Die Abschnitte des Körpers können somit besonders effektiv und in kurzer Zeit magnetisiert bzw. aufmagnetisiert werden.

Zur Magnetisierung der Abschnitte wird bevorzugt die wenigstens eine Spule radial außerhalb oder radial innerhalb der Abschnitte angeordnet. Es können auch wenigstens zwei Spulen vorgesehen sein, wobei eine der Spulen radial außerhalb und die andere der Spulen radial innerhalb der Abschnitte angeordnet wird.

Besonders bevorzugt erfolgt die Magnetisierung der Abschnitte eines Magnethohlzylinders gleichzeitig. Bei der gleichzeitigen Magnetisierung aller Abschnitte des Körpers kann der monolithische Permanentmagnet in kurzer Zeit hergestellt werden. Alternativ ist das Aufmagnetisieren der einzelnen Polbereiche sequentiell möglich, jedoch wird dies nicht bevorzugt.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Querschnittsansicht eines herkömmlichen Permanentmagnetlagers,
- Fig. 7: eine Querschnittsansicht einer Variante eines herkömmlichen Permanentmagnetlagers und
- Fig. 8: eine Querschnittsansicht eines Permanentmagnetlagers einer erfindungsgemäßen Vakuumpumpe.

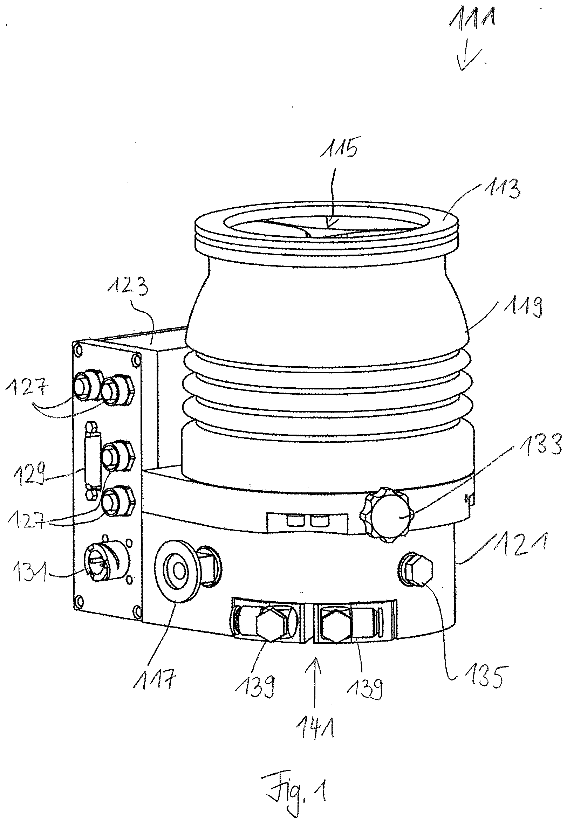

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

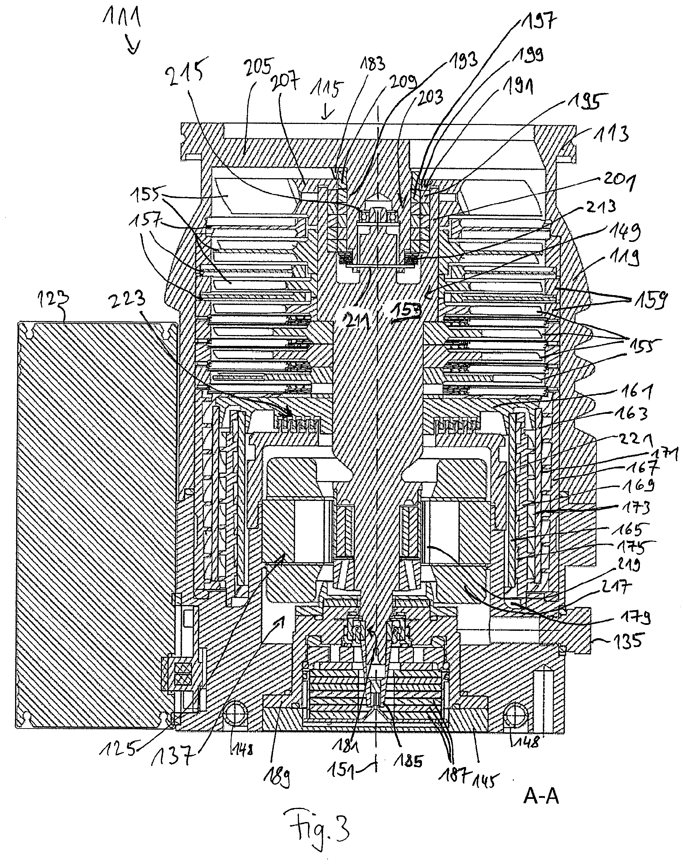

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

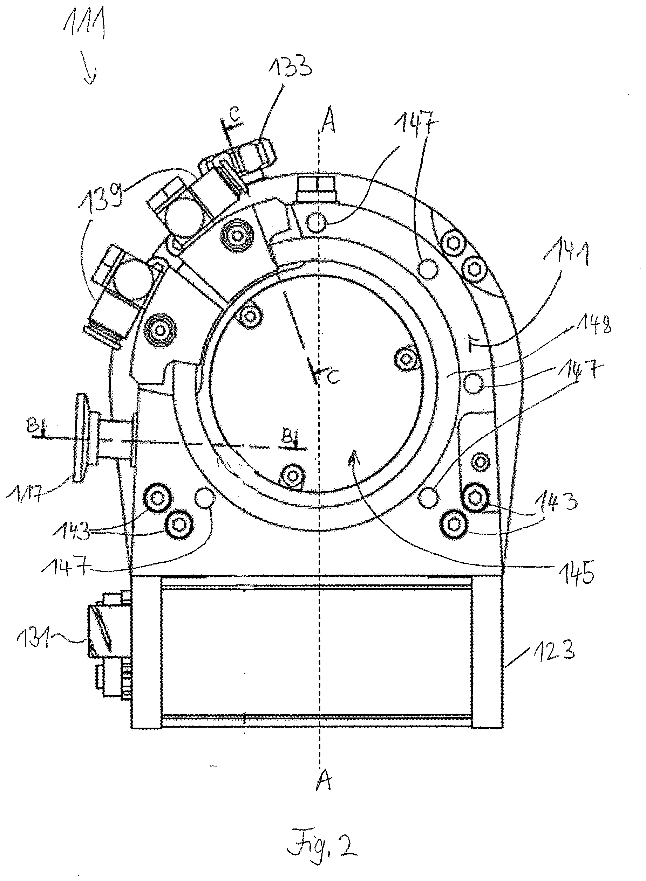

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

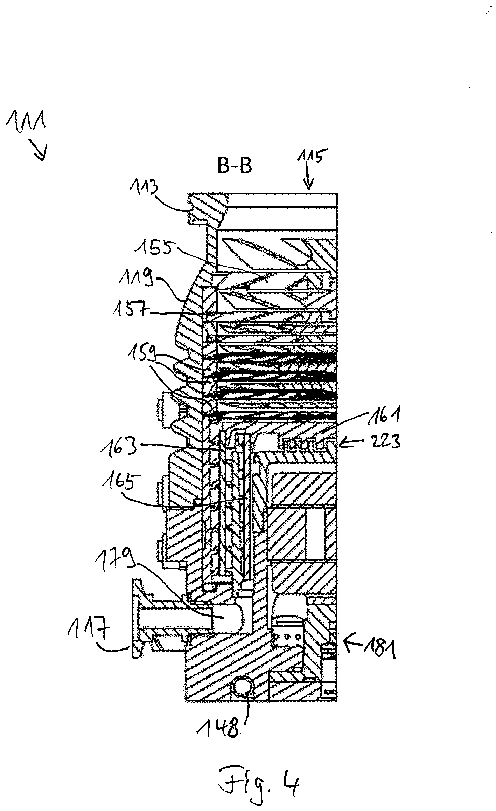

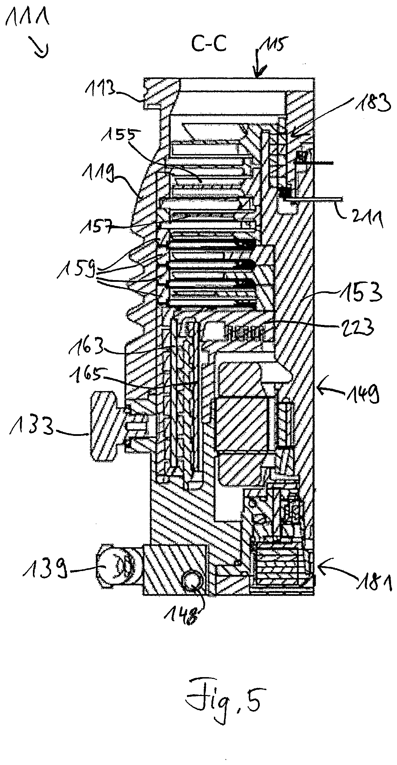

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

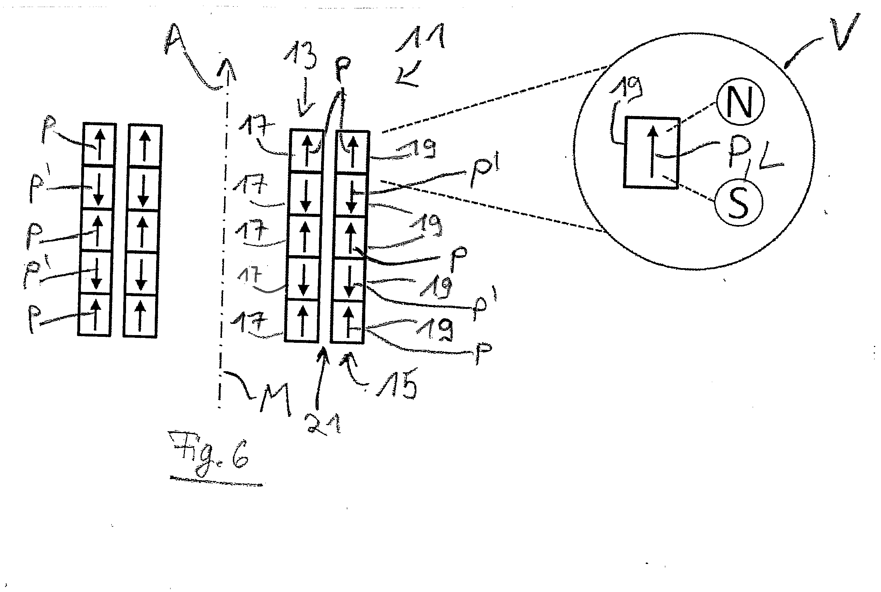

Das in Fig. 6 gezeigte Permanentmagnetlager 11 kann in der entsprechenden Weise wie das Permanentmagnetlager 183 in einer Vakuumpumpe, wie zum Beispiel der Vakuumpumpe 111, eingebaut werden. Das Permanentmagnetlager 11 umfasst eine statorseitige Lagerhälfte 13 und eine rotorseitige Lagerhälfte 15, welche jeweils einen Ringstapel aus mehreren in axialer Richtung A aufeinander gestapelten permanentmagnetischen Ringen 17, 19 umfassen. Mit axialer Richtung ist dabei die in Pfeilrichtung gerichtete Richtung längs der Mittelachse M der Ringmagnete 17, 19 gemeint. Dabei fällt die Mittelachse M zumindest im Wesentlichen mit der Rotationsachse 151 zusammen, wenn das Permanentmagnetlager 11 in die Vakuumpumpe 111 eingebaut ist. Die Ringmagnete 17, 19 liegen einander unter Ausbildung eines Lagerspalts 21 gegenüber.

Jeder Ringmagnet 17, 19 weist eine durch den jeweiligen Pfeil angezeigte Magnetpolorientierung P auf. Wie für den obersten rotorseitigen Ringmagnet 19 in dem vergrößerten Ausschnitt V in Fig. 6 gezeigt ist, wird als Magnetpolorientierung P die Richtung definiert, in der sich ausgehend vom magnetischen Südpol S des Ringmagnets 19 eine gerade Linie L zum magnetischen Nordpol N des Ringmagnets 19 erstreckt. Der oberste rotorseitige Ringmagnet 19 weist somit eine Magnetpolorientierung P auf, die in axialer Richtung A verläuft. Die Magnetpolorientierung P' des darunterliegenden, benachbarten, zweitobersten rotorseitigen Ringmagnets 19 verläuft dagegen in die entgegengesetzte Richtung, also entgegen der axialen Richtung A. Die Magnetpolorientierung P des drittobersten rotorseitigen Ringmagnets 19 verläuft wieder in axialer Richtung A und die Magnetpolorientierung P' des darunterliegenden Ringmagnets 19 verläuft wieder entgegen der axialen Richtung A. Die Magnetpolorientierung P des unteren rotorseitigen Ringmagnets 19 verläuft dagegen wieder in axialer Richtung A. Der rotorseitige Stapel aus Ringmagneten weist somit von Ringmagnet zu Ringmagnet eine Magnetpolorientierung auf, die zwischen einer Magnetpolorientierung P in axialer Richtung A und einer Magnetpolorientierung P' entgegengesetzt zur axialen Richtung A alterniert. Entsprechendes gilt für den Stapel aus Ringmagneten 17 der statorseitigen Lagerhälfte 13, wie Fig. 6 zeigt.

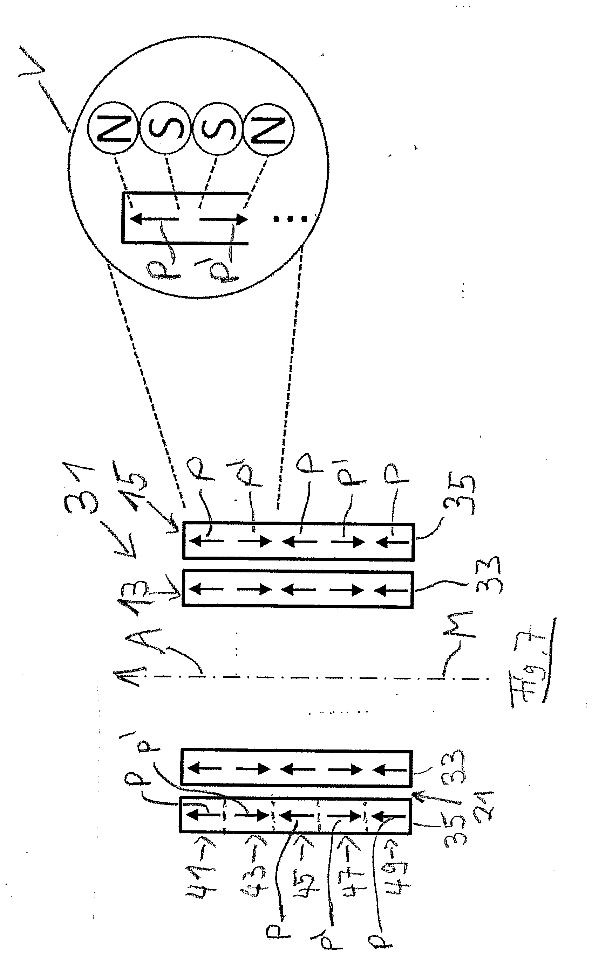

Die in Fig. 7 gezeigte Variante eines Permanentlagers 31 kann in der entsprechenden Weise wie das Permanentmagnetlager 11, 183 in eine Vakuumpumpe, wie zum Beispiel der Vakuumpumpe 111, eingebaut werden. Im Unterschied zum Permanentmagnetlager der Fig. 6 bestehen bei der Variante gemäß Fig. 7 die statorseitige Lagerhälfte 13 und die rotorseitige Lagerhälfte 15 aus jeweils einem hohlzylinderförmigen monolithischen Permanentmagnet 33, 35.

Wie in Fig. 7 beispielhaft für den monolithischen Permanentmagnet 35 gezeigt ist, weist dieser fünf in axialer Richtung A aufeinanderfolgende Abschnitte 41, 43, 45, 47, 49 auf, die sich in ihrer Magnetpolorientierung P, P' unterscheiden. Der erste Abschnitt 41 weist eine Magnetpolorientierung P in axialer Richtung A auf. Der benachbarte zweite Abschnitt 43 weist eine Magnetpolorientierung P' entgegengesetzt zur axialen Richtung A auf. Der dritte Abschnitt 45 weist eine Magnetpolorientierung P in axialer Richtung A auf. Der vierte Abschnitt 47 weist eine Magnetpolorientierung P' entgegengesetzt zur axialen Richtung A auf. Der fünfte Abschnitt 49 weist eine Magnetpolorientierung P in axialer Richtung A auf. Bei dem monolithischen Permanentmagnet 35 weisen somit - in axialer Richtung gesehen - zueinander benachbarte Abschnitte eine entgegengesetzte Magnetpolorientierung P, P' auf. Entsprechendes gilt für den statorseitigen monolithischen Permanentmagnet 33, wie in Fig. 7 angedeutet ist.

Wie erwähnt, kann die in Fig. 7 gezeigte Variante als Ersatz für das Permanentmagnetlager 183 zum Beispiel in der Vakuumpumpe 111 eingebaut werden. Die axiale Höhe der monolithischen Permanentmagnet 33, 35 kann dabei so gewählt werden, dass sie der axialen Höhe des Permanentmagnetlagers 183 entspricht. Bei der Vakuumpumpe 111 kann somit ein lediglich von den zwei monolithischen Permanentmagneten 33, 35 gebildetes Permanentlager zum Einsatz kommen, was vorteilhaft sein kann, insbesondere in Bezug auf die Lagersteifigkeit, Lagerfehler und die Langlebigkeit des Lagers sowie im Hinblick auf dessen Herstellungskosten.

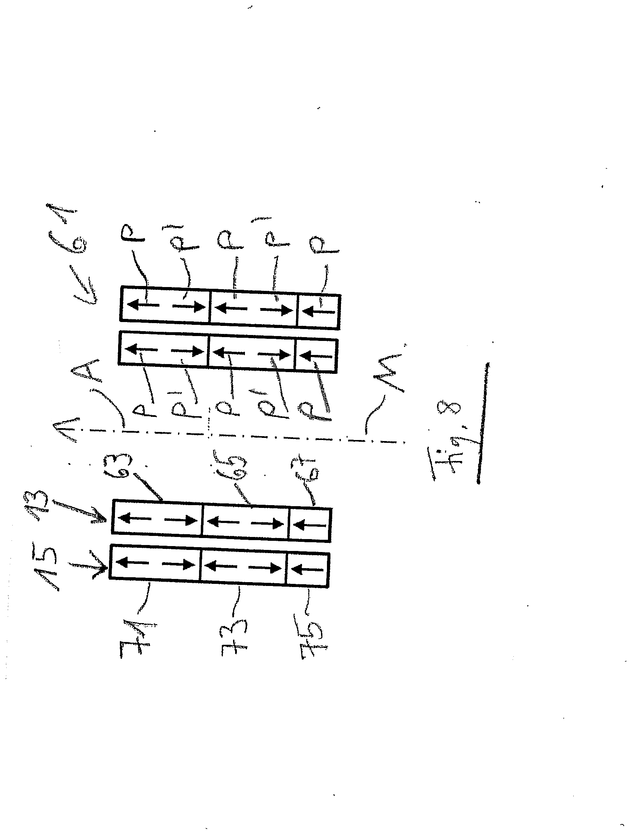

Die in Fig. 8 gezeigte Variante eines Permanentmagnetlagers 61 kann, wie die vorstehend beschriebenen Permanentmagnetlager 11, 31 und 183, ebenfalls in einer Vakuumpumpe, wie etwa der Vakuumpumpe 111, verbaut werden. Bei dem Permanentmagnetlager 61 weist die statorseitige Lagerhälfte 13 zwei hohlzylinderförmige monolithische Permanentmagnete 63, 65 und einen Ringmagnet 67 auf, die in axialer Richtung A aneinander gereiht sind, wie Fig. 8 zeigt. Jeder der monolithischen Permanentmagnete 63, 65 weist zwei Abschnitte mit wechselnder Magnetpolorientierung P, P' auf. Außerdem weist der Ringmagnet 67 die Magnetpolorientierung P auf. Es ergibt sich somit längs der axialen Richtung A eine Abfolge an sich abwechselnden Magnetpolorientierungen P, P' wie bei der Variante der Fig. 7.

In entsprechender Weise weist die rotorseitige Lagerhälfte 15 zwei hohlzylinderförmige monolithische Permanentmagnete 71, 73 und einen Ringmagnet 75 auf, die in axialer Richtung A aneinander gereiht sind und ebenfalls die gleiche Abfolge an sich abwechselnden Magnetpolorientierungen P, P' bereitstellen.

Die in Fig. 8 gezeigte Variante des Permanentmagnetlagers 61 weist somit einerseits monolithische Permanentmagnete 63, 65, 71, 73 und andererseits herkömmliche Ringmagnete 67, 75 auf. Vorteilhaft an diesem Lager ist zum Beispiel, dass dessen axiale Höhe auf einfache Weise verändert werden kann, beispielsweise durch Hinzufügung eines weiteren Ringmagnets sowohl zu der statorseitigen Lagerhälfte 13 als auch zu der rotorseitigen Lagerhälfte 15.

### Bezugszeichenliste

- 11: Permanentmagnetlager
- 13: statorseitige Lagerhälfte
- 15: rotorseitige Lagerhälfte
- 17: Ringmagnet
- 19: Ringmagnet
- 21: Lagerspalt
- 31: Permanentmagnetlager
- 33: monolithischer Permanentmagnet
- 35: monolithischer Permanentmagnet
- 41: Abschnitt
- 43: Abschnitt
- 45: Abschnitt
- 47: Abschnitt
- 49: Abschnitt
- 61: Permanentmagnetlager
- 63: monolithischer Permanentmagnet
- 65: monolithischer Permanentmagnet
- 67: Ringmagnet
- 71: monolithischer Permanentmagnet
- 73: monolithischer Permanentmagnet
- 75: Ringmagnet
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

- A: axiale Richtung
- M: Mittelachse
- V: Ausschnitt
- P, P': Magnetpolorientierung
- L: Linie
- N: Nordpol
- S: Südpol

## Patentansprüche

1. Vakuumpumpe, insbesondere Turbomolekularpumpe, mit einem gegenüber einem Stator der Vakuumpumpe um eine Rotationsachse (151) drehbaren Rotor (149), zu dessen drehbarer Lagerung wenigstens ein Permanentmagnetlager (, 61) vorgesehen ist,
**dadurch gekennzeichnet, dass**
das Permanentmagnetlager ( 61) aus einer Kombination von einem oder mehreren Ringmagneten (67, 75) und wenigstens einem, insbesondere ring- oder hohlzylinderförmig ausgebildeten, monolithischen Permanentmagneten ( 63, 65, 71, 73) gebildet ist, wobei der monolithische Permanentmagnet zwei oder mehr in axialer Richtung aufeinanderfolgende Abschnitte aufweist, und wobei zueinander benachbarte Abschnitte eine zumindest im Wesentlichen entgegengesetzte Magnetpolorientierung (P, P') aufweisen.

2. Vakuumpumpe nach Anspruch 1,
**dadurch gekennzeichnet, dass**
bei benachbarten Abschnitten die Magnetpolorientierung (P) des einen Abschnitts zumindest annähernd in axialer Richtung (A) verläuft und die Magnetpolorientierung (P') des anderen Abschnitts zumindest annähernd entgegengesetzt dazu verläuft, und/oder
dass zwischen benachbarten Abschnitten ein Übergangsbereich vorhanden ist.

3. Vakuumpumpe nach einem der Ansprüche 1 oder 2,
**dadurch gekennzeichnet, dass**
das Permanentmagnetlager ( 61) auf der Seite des Stators einen derartigen monolithischen Permanentmagnet ( 63, 65) und auf der Seite des Rotors einen weiteren derartigen monolithischen Permanentmagnet ( 71, 73) aufweist.

4. Vakuumpumpe nach Anspruch 3,
**dadurch gekennzeichnet, dass**
der statorseitige monolithische Permanentmagnet ( 63, 65) innerhalb des rotorseitigen monolithischen Permanentmagnets ( 71, 73) angeordnet ist, oder umgekehrt, dass der rotorseitige monolithische Permanentmagnet ( 71, 73) innerhalb des statorseitigen monolithischen Permanentmagnets (63, 65) angeordnet ist.

## Claims

1. A vacuum pump, in particular a turbomolecular pump, comprising a rotor (149) which is rotatable about an axis of rotation (151) with respect to a stator of the vacuum pump and for whose rotatable support at least one permanent magnet bearing (61) is provided,
**characterized in that**
the permanent magnet bearing (61) is formed from a combination of one or more ring magnets (67, 75) and at least one monolithic permanent magnet (63, 65, 71, 73) which is in particular of a ring shape or a hollow cylindrical shape, with the monolithic permanent magnet having two or more sections following one another in the axial direction, and with sections adjacent to one another having an at least substantially opposite magnetic pole orientation (P, P').

2. A vacuum pump in accordance with claim 1,
**characterized in that**
in the case of adjacent sections, the magnetic pole orientation (P) of the one section extends at least approximately in the axial direction (A) and the magnetic pole orientation (P') of the other section extends at least approximately opposite thereto, and/or
**in that** a transition region is present between adjacent sections.

3. A vacuum pump in accordance with one of the claims 1 or 2, **characterized in that**
the permanent magnet bearing (61) has one such monolithic permanent magnet (63, 65) at the side of the stator and a further such monolithic permanent magnet (71, 73) at the side of the rotor.

4. A vacuum pump in accordance with claim 3,
**characterized in that**
the stator-side monolithic permanent magnet (63, 65) is arranged within the rotor-side monolithic permanent magnet (71, 73) or, vice versa, that the rotor-side monolithic permanent magnet (71, 73) is arranged within the stator-side monolithic permanent magnet (63, 65).

## Revendications

1. Pompe à vide, en particulier pompe turbomoléculaire, comprenant un rotor (149) pouvant tourner autour d'un axe de rotation (151) par rapport à un stator de la pompe à vide, au moins un palier à aimant permanent (61) étant prévu pour le montage rotatif dudit rotor,
**caractérisée en ce que**
le palier à aimant permanent (61) est formé d'une combinaison d'un ou de plusieurs aimants annulaires (67, 75) et d'au moins un aimant permanent monolithique (63, 65, 71, 73), en particulier en forme d'anneau ou de cylindre creux, l'aimant permanent monolithique comprenant deux ou plusieurs portions se succédant dans la direction axiale, et des portions voisines les unes des autres présentant une orientation de pôle magnétique (P, P') au moins sensiblement opposée.

2. Pompe à vide selon la revendication 1,
**caractérisée en ce que**
les portions étant voisines, l'orientation de pôle magnétique (P) de l'une des portions s'étend au moins approximativement dans la direction axiale (A) et l'orientation de pôle magnétique (P') de l'autre portion s'étend au moins approximativement en sens opposé, et/ou
**en ce qu'**il existe une zone de transition entre des portions voisines.

3. Pompe à vide selon l'une des revendications 1 ou 2,
**caractérisée en ce que**
le palier à aimant permanent (61) comprend un aimant permanent monolithique (63, 65) dudit type du côté du stator et un autre aimant permanent monolithique (71, 73) dudit type du côté du rotor.

4. Pompe à vide selon la revendication 3,
**caractérisée en ce que**
l'aimant permanent monolithique (63, 65) côté stator est disposé à l'intérieur de l'aimant permanent monolithique (71, 73) côté rotor, ou inversement, **en ce que** l'aimant permanent monolithique (71, 73) côté rotor est disposé à l'intérieur de l'aimant permanent monolithique (63, 65) côté stator.
